(19) Europäisches Patentamt
European Patent Office
Office européen des brevets

(11) Numéro de publication: **0 160 589**
**B1**

# (12) FASCICULE DE BREVET EUROPEEN

(45) Date de publication du fascicule du brevet: **03.08.88**

(51) Int. Cl.⁴: **C 01 G 56/00**, G 21 C 19/46, C 25 B 15/08

(21) Numéro de dépôt: **85400539.4**

(22) Date de dépôt: **21.03.85**

## (54) Procédé et dispositif de dissolution des oxydes de plutonium et/ou de neptunium.

(30) Priorité: **27.03.84 FR 8404766**

(43) Date de publication de la demande: **06.11.85 Bulletin 85/45**

(45) Mention de la délivrance du brevet: **03.08.88 Bulletin 88/31**

(84) Etats contractants désignés: **BE DE GB**

(56) Documents cités:
**EP - A - 0 089 185**
**FR - A - 827 579**
**US - A - 3 976 775**
**US - A - 4 069 293**

**CHEMICAL ABSTRACTS, vol. 98, no. 8, février 1983, page 475, no. 61817s, Columbus, Ohio, US; L.A. BRAY et al.: "Catalyzed electrolytic dissolution of plutonium dioxide"**

(73) Titulaire: **COMMISSARIAT A L'ENERGIE ATOMIQUE, 31/33, rue de la Fédération, F-75015 Paris (FR)**

(72) Inventeur: **Koehly, Gérard, 17, Allée des Primevères, F-91570 Bièvres (FR)**
Inventeur: **Bourges, Jacques, 10, rue de Perthuis, F-91370 Verrières le Buisson (FR)**
Inventeur: **Lecomte, Michael, Montée des Chèvres, F-91190 Gif-sur-Yvette (FR)**
Inventeur: **Madic, Charles, 5, Place du Marché, F-94320 Thiais (FR)**

(74) Mandataire: **Mongrédien, André et al, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention a pour objet un procédé et un dispositif de dissolution d'oxydes de plutonium et/ou de neptunium.

On sait que l'un des problèmes rencontrés fréquemment dans les installations de fabrication de combustibles nucléaires et de traitement de combustibles nucléaires irradiés est d'obtenir dans de bonnes conditions une dissolution des oxydes de plutonium et/ou de neptunium, qui sont très difficiles à dissoudre.

Jusqu'à présent, la méthode la plus utilisée pour dissoudre l'oxyde de plutonium réfractaire obtenu par calcination à haute température était basée sur l'effet catalytique des ions fluorure qui permet de dissoudre le plutonium en solution nitrofluorhydrique. Cependant, selon cette méthode, on doit utiliser une concentration en acide fluorhydrique particulièrement importante et opérer dans des conditions d'ébullition avec reflux afin de rendre maximale la vitesse de dissolution. Aussi, en raison de l'agressivité du milieu d'attaque qui est particulièrement néfaste à la bonne tenue à la corrosion des matériaux constituant le récipient d'attaque, cette méthode est peu attractive.

On peut aussi dissoudre l'oxyde de plutonium et les oxydes mixtes $(U, Pu)O_2$ dans de l'acide nitrique par l'action du nitrate de plutonium (IV) présent dans la solution d'attaque à une forte concentration, généralement d'environ 100 g/l. Néanmoins, la vitesse d'attaque du bioxyde de plutonium pur est faible et la nécessité d'un recyclage de quantités importantes de plutonium pour constituer la solution d'attaque rend cette méthode peu séduisante.

On a démontré également que le bioxyde de plutonium, soit pur, soit contenu dans des résidus, pouvait être dissous en milieu nitrique à l'ébullition au reflux à condition de réaliser:

- son mélange avec de l'oxyde d'uranium de façon à ce que le mélange contienne 70% de $UO_2$,
- puis le frittage de ce mélange de poudres dans une presse à une température de 1600 à 1800°C.

Cependant, bien que cette méthode ne nécessite l'emploi que de solutions peu agressives, elle est difficile à mettre en œuvre industriellement, particulièrement en ce qui concerne la taille des appareillages, donc des locaux, qui est conditionnée principalement par la présence d'importantes quantités d'uranium.

L'ajout d'oxydants forts dans des solutions nitriques permet aussi de réaliser la dissolution du bioxyde de plutonium en solution nitrique. Parmi les oxydants susceptibles d'être utilisés, le cérium (IV) a été principalement étudié et il a été démontré qu'une régénération en continu du cérium (IV) consommé par réaction avec $PuO_2$ était nécessaire pour obtenir un bon déroulement de la réaction de dissolution. Cette régénération peut être effectuée par oxydation anodique du $Ce^{3+}$ dans un électrolyseur. Cependant, pour obtenir des cinétiques significatives, cette méthode nécessite l'utilisation de températures voisines de l'ébullition, ce qui se traduit parfois par l'apparition de phénomènes parasites tels qu'une disparition du réactif par suite de la précipitation de $CeO_2$.

Plus récemment, on a envisagé d'utiliser d'autres agents oxydants et de les régénérer par électrolyse pour réaliser la dissolution du plutonium. Ainsi, EP-A-0089185 (Exxon Nuclear Cy Inc.) décrit un procédé de dissolution du bioxyde de plutonium et/ou du bioxyde de neptunium dans une solution aqueuse, qui consiste à introduire dans une cellule d'électrolyse ayant une anode et une cathode, une solution aqueuse contenant de l'acide nitrique, un agent oxydant tel qu'un composé d'argent, et l'oxyde de plutonium et/ou de neptunium à dissoudre, et à appliquer une différence de potentiel entre l'anode et la cathode pour faire passer un courant électrique dans la cellule et dissoudre l'oxyde de plutonium et/ou de neptunium.

Cependant, l'emploi de cette technique pour dissoudre le plutonium et/ou le neptunium s'est avéré difficile à mettre en œuvre à l'échelle industrielle, en raison notamment du faible rendement de la réaction et des dépenses d'énergie à envisager. En effet, le mécanisme de cette réaction de dissolution n'ayant pas été totalement élucidé, on a utilisé des quantités de courant électrique importantes pour obtenir la dissolution de très faibles quantités d'oxyde de plutonium, ce qui ne peut être envisagé pour une exploitation industrielle de ce procédé.

La présente invention a précisément pour objet un procédé de dissolution des oxydes de plutonium et/ou de neptunium qui utilise l'oxyde argentique comme agent oxydant en solution nitrique, et qui pallie les inconvénients du procédé précité.

Le procédé, selon l'invention, de dissolution d'oxyde de plutonium et/ou d'oxyde de neptunium, consiste à introduire dans une cellule d'électrolyse ayant une anode et une cathode, une solution aqueuse d'acide nitrique, ayant une concentration de 2 à 8 $mol.l^{-1}$ l'oxyde de plutonium et/ou l'oxyde de neptunium à dissoudre et un agent oxydant constitué par de l'oxyde d'argent pour oxyder les oxydes de plutonium et/ou de neptunium et les dissoudre dans la solution, et à appliquer une différence de potentiel entre l'anode et la cathode pour régénérer l'agent oxydant, et il se caractérise en ce que l'on soumet la solution à une agitation au niveau de l'anode, et en ce que la différence de potentiel appliquée entre l'anode et la cathode est telle que l'on maintient l'intensité du courant I dans la cellule à une valeur constante choisie en fonction de la surface de l'anode et de la concentration en argent de la solution pour obtenir un rendement faradique d'au moins 0,2.

En effet, l'oxyde d'argent est un oxydant fort du plutonium, qui réagit en solution nitrique de la façon suivante:

$Ag^{2+} + PuO_2(s) \rightarrow PuO_2^{+} + Ag^{+}$
$Ag^{2+} PuO_2^{+} \rightarrow PuO_2^{2+} + Ag^{+}$

Ainsi, pour oxyder une molécule de $PuO_2$, il est nécessaire d'utiliser deux molécules de AgO mais ces deux réactions ont une cinétique très élevée, ce qui conduit à une dissolution pratiquement instantanée du plutonium.

Aussi, pour utiliser une quantité d'oxyde d'argent moins importante, que celle correspondant à au moins deux moléculés de HgO par mole d'oxyde de plutonium et/ou d'oxyde de neptunium à dissoudre, on régénére, selon l'invention, les ions $Ag^{+}$ produits lors de cette oxydation pour les convertir en $Ag^{2+}$ par une méthode d'éléctrolyse. Dans ce cas, on introduit dans la cellule d'éléctrolyse ayant une anode et une cathode, la solution aqueuse contenant 2 à 8 mol.$l^{-1}$ d'acide nitrique, l'oxyde de plutonium et/ou l'oxyde de neptunium à dissoudre, et l'oxyde d'argent, on soumet la solution à une agitation au niveau de l'anode et on applique une différence de potentiel entre l'anode et la cathode de façon à maintenir l'intensité du courant I dans la cellule à une valeur constante choisie en fonction de la surface de l'anode et de la concentration en argent de la solution pour obtenir un rendement faradique d'au moins 0,2.

En effet, à la suite de recherches effectuées pour parvenir à la présente invention, on a bien élucidé les mécanismes de dissolution du plutonium et on a découvert que, dans un procédé de dissolution au moyen d'oxyde d'argent, comportant une régénération de l'argent par voie électrolytique, le seul facteur qui pouvait limiter la vitesse de dissolution du plutonium était la vitesse de régénération des ions $Ag^{2+}$.

En effet, la réaction de dissolution du plutonium en présence d'argent correspond aux schémas réactionnels suivants:

$$Ag^{2+} + PuO_{2(S)} \rightarrow PuO_2^{+} + Ag^{+} \quad (1)$$

$$Ag^{2+} + PuO_2^{+} \rightarrow PuO_2^{2+} + Ag^{+} \quad (2)$$

$$2\,Ag^{+} \rightarrow 2\,Ag^{2+} + 2e \quad (3)$$

Parmi ces réactions, comme on l'a vu précédemment, les deux premières qui concernent l'oxydation du plutonium, ont une cinétique très élevée. Ceci a pu être mis en évidence lors d'essais de dissolution du bioxyde de plutonium dans une solution nitrique 4N, par adjonction d'oxyde d'argent, ce qui conduit à une dissolution pratiquement instantanée du plutonium. En revanche, si l'on réalise ces essais avec une solution nitrique 2N, la réaction est moins rapide car l'oxyde d'argent est peu soluble dans cette solution et, de ce fait, la cinétique de dissolution est liée dans ce cas à la vitesse de la réaction $AgO + 2H^{+} \rightleftarrows Ag^{2+} + H_2O$.

Aussi, selon l'invention, pour obtenir une vitesse maximale de dissolution du plutonium, on agit sur la réaction (3) de régénération des ions $Ag^{2+}$ qui a lieu sur l'anode de la cellule. Dans ce but, on favorise tout d'abord les réactions des ions $Ag^{+}$ sur l'anode en agitant la solution au niveau de l'anode. Ainsi, on limite la couche de diffusion et on augmente les contacts des ions $Ag^{+}$ avec l'anode.

Par ailleurs, on applique un potentiel tel que l'on obtienne une intensité de courant pratiquement constante dans la cellule, et on choisit cette intensité de courant en fonction de la concentration en argent de la solution et de la surface de l'anode pour utiliser uniquement ce courant électrique pour la réaction (3) de production des ions $Ag^{2+}$.

Ainsi, on évite l'apparition de réactions secondaires parasites telles qu'une électrolyse de l'eau et on limite au maximum le dégagement d'oxygène sur l'anode.

Dans ces conditions, on peut obtenir un rendement faradique sensiblement égal à 1 et une vitesse maximale de dissolution du plutonium et/ou du neptunium.

On rappelle que le rendement faradique est défini par la formule $N_1/N$ dans laquelle $N_1$ est égal à $2 \times 96500 \times n$ coulombs avec n représentant le nombre de moles de bioxyde de plutonium et/ou de neptunium à oxyder, et N représente le nombre de coulombs effectivement dépensés dans la cellule pour oxyder les n moles de bioxyde de plutonium et/ou de neptunium.

Dans le cas de la demande EP-A-0 089 185 où l'on utilise une intensité de 2,4 A pendant 120 min pour dissoudre 129 mg de plutonium, on utilise 17 280 Cb, alors que pour un rendement faradique égal à 1, on devrait utiliser uniquement selon l'invention 91,86 Cb.

Ainsi, dans le brevet européen, les réactions parasites sont très importantes. Il est d'ailleurs indiqué dans ce brevet, qu'on doit appliquer à la cellule un potentiel suffisant pour obtenir un dégagement d'oxygène gazeux à l'anode, ce qui est justement la réaction que l'on veut éviter dans le procédé de l'invention.

Par ailleurs, on peut noter que contrairement aux procédés de l'art antérieur, il n'est pas nécessaire d'utiliser dans l'invention, une poudre de $PuO_2$ et /ou $NpO_2$ présentant une surface spécifique appropriée car l'influence de ce paramètre sur la dissolution reste négligeable par rapport à la vitesse de production des ions $Ag^{2+}$.

Dans le procédé de l'invention, la concentration en acide nitrique de la solution aqueuse est de préférence de 2 à 6 mol.$l^{-1}$, car la solubilité de l'argent (II) augmente avec la concentration en acide nitrique.

On opère, de préférence, à une température de 20 à 40°C comme précédemment afin d'obtenir une vitesse de dissolution satisfaisante tout en conservant une stabilité suffisante des ions $Ag^{2+}$ vis-à-vis de la réaction parasite d'oxydation de l'eau par les ions $Ag^{2+}$, dont la vitesse augmente avec la température.

L'invention a également pour objet un dispositif de dissolution d'oxyde de plutonium et/ou d'oxyde de neptunium à l'état solide conçu spécialement pour traiter ces matériaux selon le procédé de l'invention, dans les conditions voulues de sécurité.

Ce dispositif de dissolution comprend:

- un premier tube et un second tube d'axe vertical ayant chacun des dimensions telles qu'ils soient géométriquement sûrs, lesdits tubes étant reliés entre eux par au moins une conduite permettant de faire circuler un mélange solide-solution du second tube au premier tube,
- une anode disposée dans le premier tube,
- une cathode disposée dans le premier tube à l'intérieur d'un compartiment cathodique délimité en partie par une paroi poreuse en matériau isolant électrique,
- des moyens pour agiter le mélange solide-solution présent dans le premier tube,
- des moyens pour refroidir le mélange solide-solution, et
- des moyens pour introduire dans le second tube l'oxyde de plutonium et/ou l'oxyde de neptunium solides à dissoudre et la solution d'acide nitrique nécessaire pour la dissolution.

Selon un premier mode de réalisation de ce dispositif, les deux tubes sont reliés par deux conduites permettant de faire circuler le mélange solide-solution du second tube au premier tube, puis du premier tube au second tube, et les moyens pour agiter le mélange solide-solution présent dans le premier tube sont des moyens qui permettent également de mettre en circulation le mélange solide-solution du premier tube au second tube.

Ces moyens d'agitation et de mise en circulation sont avantageusement constitués par une turbine entraînée par un moteur électrique.

On peut aussi utiliser une pompe ou tout autre moyen capable de mettre en circulation un mélange solide-liquide dans les deux tubes.

Dans ce premier mode de réalisation du dispositif de l'invention, les moyens pour refroidir le mélange solide-solution sont disposés dans le second tube. De plus ce second tube est avantageusement muni de moyens pour détecter la fin de la dissolution et d'une conduite de vidange débouchant à la partie inférieure de celui-ci.

Le fait d'utiliser deux tubes permet d'obtenir une hauteur suffisante tout en conservant une géométrie sûre et de pouvoir ainsi traiter une quantité relativement importante d'oxyde de plutonium et/ou d'oxyde de neptunium. Par ailleurs, la présence de deux tubes séparés facilite l'implantation des différents équipements nécessaires à la réalisation de la dissolution. Ainsi, le premier tube comporte les moyens nécessaires pour réaliser l'électrolyse dans de bonnes conditions et il peut être surmonté par ailleurs par une colonne de lavage des gaz dégagés à la cathode.

En effet, ce premier tube comprend l'anode et les moyens pour agiter le mélange solide-solution. Par ailleurs, un compartiment cathodique est disposé dans ce premier tube et il est délimité en partie par une paroi poreuse en matériau isolant qui permet d'assurer le contact électrique entre la solution présente dans le premier tube et la solution présente dans le compartiment cathodique.

Afin de garantir l'absence de contamination, le dispositif comprend avantageusement des moyens pour détecter le niveau du liquide présent dans le compartiment cathodique et des moyens asservis à ces moyens de détection pour introduire un liquide dans le compartiment cathodique afin de maintenir le niveau de liquide dans ce compartiment à une valeur voulue. Ainsi, en maintenant le niveau de liquide dans le compartiment cathodique à une valeur légèrement supérieure à celle du niveau de liquide dans le premier tube, on peut permettre un léger écoulement du liquide du compartiment cathodique dans le compartiment anodique et ainsi éviter que la solution d'acide nitrique contenant le plutonium puisse pénétrer dans le compartiment cathodique.

Par ailleurs, selon une disposition avantageuse de l'invention, le compartiment cathodique est relié à une colonne de lavage des gaz. Ainsi, les produits gazeux formés sur la cathode (produits nitreux et hydrogène) sont captés et entraînés après dilution dans l'air au travers d'une colonne de lavage ayant comme fonction la rétention des produits azotés.

Dans ce premier mode de réalisation, le second tube comporte les équipements nécessaires pour assurer le refroidissement de la solution, l'alimentation en $PuO_2$ et/ou $NpO_2$, l'alimentation en acide nitrique, la détection de la fin de la dissolution et le soutirage de la solution obtenue.

Ainsi, le fait d'associer différents équipements à chacun des tubes permet de faciliter les manipulations et interventions sur l'appareillage et de pouvoir implanter ce dispositif sous le plan de travail d'une boîte à gants afin de permettre à l'opérateur d'intervenir en position assise sur les divers organes facilement accessibles.

Enfin, pour améliorer les conditions de sûreté, le dispositif comprend avantageusement un écran en matériau neutrophage disposé entre les deux tubes.

Selon un second mode de réalisation du dispositif de l'invention, plus particulièrement adapté à la dissolution en continu d'oxyde de plutonium et/ou d'oxyde de neptunium, le dispositif comprend une seule conduite reliant les parties inférieures du premier et du second tubes et il est muni d'une conduite d'évacuation en trop-plein à la partie supérieure du premier tube. Dans ce cas, les moyens de refroidissement sont disposés dans le premier tube.

Dans ce second mode de réalisation, le dispositif peut comprendre également un écran en matériau neutrophage, une colonne de lavage des gaz, et/ou des moyens pour détecter le niveau du liquide présent dans le compartiment cathodique et pour introduire dans ce dernier du liquide pour maintenir le niveau à une valeur voulue.

D'autres caractéristiques et avantages de l'invention apparaîtront mieux à la lecture des exemples suivants donnés bien entendu à titre illustratif et non limitatif en référence au dessin annexé sur lequel:

- la figure 1 représente schématiquement en coupe verticale un dispositif de dissolution pour mettre en œuvre le procédé de l'invention, et

- la figure 2 représente schématiquement en coupe verticale un autre mode de réalisation du dispositif de l'invention permettant de réaliser en continu la dissolution d'oxyde de plutonium et/ou d'oxyde de neptunium.

Sur la figure 1, on voit que le dispositif de l'invention comprend un premier tube 1 et un second tube 3 de diamètre identique reliés par des conduites 5 et 7 disposées de façon à permettre la circulation suivant le trajet des flèches du mélange solide-solution du second tube 3 au premier tube 1 par la conduite 5 en déversoir et du premier tube 1 au second tube 3 par la conduite 7. Les deux tubes 1 et 3 ont une géométrie sûre et ils peuvent par exemple présenter les dimensions suivantes: un diamètre de 16 cm et une hauteur totale de 1 m, ce qui correspond à une capacité utile de 20 l. Les tubes 1 et 3 peuvent être réalisés en plexiglass, en tantale ou en verre.

Le premier tube 1 comporte les moyens voulus pour assurer l'électrolyse, l'agitation du mélange solide-solution et le piégeage des gaz produits lors de l'électrolyse. Ainsi, le premier tube 1 comprend une anode 9 qui est de préférence de forme cylindrique afin de présenter une surface importante, et une cathode 11 disposée dans un compartiment cathodique 12 délimité en partie par une paroi poreuse en matériau isolant électrique et relié à une colonne de lavage des gaz 13. Ainsi, les produits gazeux formés sur la cathode (produits nitreux et hydrogène) sont captés et entraînés après dilution dans l'air au travers d'une colonne de lavage ayant comme fonction la rétention des produits azotés, l'hydrogène étant évacué, par la ventilation de l'enceinte de confinement dans laquelle est disposé le dispositif.

Le compartiment cathodique qui peut avoir par exemple un diamètre de 5 cm et un volume d'environ 0.5 l, est muni de plus d'un détecteur de niveau 14 et d'une conduite 16 d'introduction d'un électrolyte dans le compartiment cathodique 12. La conduite 16 comporte une vanne 18 asservie au moyen de détection 14 du niveau dans ce compartiment afin de commander l'ouverture de la vanne 18 lorsque le niveau est situé en dessous de la valeur voulue et de fermer au contraire la vanne 18 lorsque le niveau de liquide a atteint la valeur voulue. Par ailleurs, on note que le compartiment cathodique est disposé en face de la conduite 5, ce qui permet de faciliter l'évacuation des calories dégagées dans ce compartiment, par le flux de mélange solide-liquide entrant dans la conduite 5. Une turbine 15 qui peut être entraînée par un moteur électrique 20 permet d'assurer le brassage et la circulation du mélange solide-liquide entre les tubes 1 et 3.

Le second tube 3 est muni de moyens pour assurer le refroidissement du mélange solide-solution, qui sont constitués par un serpentin 17 immergé dans la solution et parcouru par un liquide réfrigérant. Il comporte également une trémie d'alimentation 19 pour introduire l'oxyde de plutonium et/ou l'oxyde de neptunium à dissoudre, des moyens 21 pour détecter la fin de la réaction, des moyens 23 pour soutirer la solution obtenue et une conduite 24 d'introduction des réactifs dans le dispositif, soit l'oxyde d'argent et l'acide nitrique.

Pour améliorer la sûreté, le dispositif comprend de plus un écran 25 en matériau neutrophage par exemple en plâtre ou en polyéthylène boré, disposé entre les deux tubes.

La trémie 19 est avantageusement une trémie vibrante permettant de répartir l'alimentation en oxyde de plutonium et/ou de neptunium sur une durée comprise entre 1/3 et 2/3 de la durée totale de dissolution.

Les moyens 21 pour détecter la fin de la réaction peuvent être constitués par une sonde optique capable de repérer la coloration de l'oxyde d'argent, ce qui indique que les ions argent ne sont plus utilisés pour oxyder le plutonium. On peut aussi utiliser une sonde de mesure de la densité du liquide car la fin de la réaction peut être repérée par l'obtention d'une densité stable. On peut encore utiliser une sonde de mesure du dégagement gazeux sur l'anode.

Les moyens 23 de soutirage de la solution obtenue comportent une conduite de vidange qui débouche à l'extrémité inférieure du deuxième tube.

La turbine 15 présente dans le premier tube 1 peut être remplacée par une pompe ou tout moyen approprié permettant d'assurer une agitation énergique dans le premier tube et de mettre en circulation le mélange solide-liquide du premier tube au second tube dans le sens indiqué par les flèches.

La paroi poreuse de séparation du compartiment cathodique 12 peut être réalisée en verre fritté ou en céramique frittée, par exemple en alumine frittée.

Généralement, la solution utilisée dans le compartiment cathodique 12 est une solution d'acide nitrique 8N.

Sur la figure 2, on a représenté un autre mode de réalisation du dispositif de l'invention capable de fonctionner en continu.

Sur cette figure, on a repris les mêmes références pour désigner les constituants du dispositif qui sont identiques à ceux représentés sur la figure 4.

Ainsi, on voit que le dispositif comprend un premier tube 1 et un deuxième tube 3 reliés à leur partie inférieure par une conduite 7.

Le premier tube 1 comporte les moyens voulus pour assurer l'électrolyse, l'agitation et le refroissement du mélange solide-solution. Ainsi, il comprend une anode cylindrique 9 et une cathode 11 disposée dans un compartiment cathodique 12 limité en partie par une paroi poreuse en matériau isolant électrique et relié à une colonne de lavage

des gaz non représentée sur ce dessin. Une turbine 15 disposée également dans le premier tube permet d'assurer l'agitation du mélange solide-solution et un serpentin 17 disposé autour de l'anode 9 permet d'assurer le refroidissement de la solution.

Le second tube 3 est muni d'une trémie d'alimentation 19 en oxyde de plutonium et/ou en oxyde de neptunium à dissoudre et de conduits 24 d'introduction d'acide nitrique et d'oxyde d'argent.

En vue de réaliser la dissolution en continu de l'oxyde de plutonium et/ou de l'oxyde de neptunium, le compartiment 1 est muni d'une conduite de déversement en trop-plein 31 pour l'évacuation en continu de la solution de plutonium obtenue.

Les exemples suivants sont donnés à titre non limitatif pour illustrer le procédé de l'invention.

Exemple 1

Cet exemple se rapporte à la dissolution d'oxyde de plutonium $PuO_2$ qui a été soumis à une calcination préalable pendant trois heures à 1000°C, ce qui le rend très réfractaire à la dissolution nitrique.

Dans cet exemple, on utilise une cellule électrolytique en verre maintenue à 25°C et séparée en deux compartiments par une paroi en verre fritté et on soumet la solution à une agitation au niveau de l'anode au moyen d'un agitateur en téflon entraîné par un moteur électrique.

On réalise la dissolution de l'oxyde de plutonium dans les conditions expérimentales suivantes:

- acidité nitrique: 4 $mol.l^{-1}$,
- température: 25°C,
- concentration en argent: $5.10^{-2}$ $mol.l^{-1}$,
- densité de courant anodique: 57 $mA.cm^{-2}$,
- volume de l'anolyte: 90 ml,
- surface de l'anode: 36 $cm^2$.

On introduit dans cette solution 5 g d'oxyde de plutonium et on constate qu'après 37 min de passage du courant électrique, la dissolution de l'oxyde de plutonium est terminée.

Ainsi, cette dissolution s'effectue à une vitesse constante de 128 $\pm$ 10 mg/min et le rendement faradique est de 0,78.

Exemple 2

Dans cet exemple, on réalise la dissolution d'oxde de plutonium en utilisant une cellule d'électrolyse à compartiments anodique et cathodique séparés, comportant une anode en platine de 36 $cm^2$ et une cathode en platine de 3 $cm^2$ de surface.

On introduit dans le compartiment anodique 90 ml d'une solution aqueuse contenant 4 $mol.l^{-1}$ d'acide nitrique et $5.10^{-2}$ $mol.l^{-1}$ d'argent. Dans le compartiment cathodique, on introduit 10 ml d'une solution nitrique 11 N. On ajoute alors 20,5 g d'oxyde de plutonium à la solution du compartiment anodique et on applique entre les électrodes une différence de potentiel qui permet d'obtenir un courant d'électrolyse de 1,4 A. Après 3 h d'opération, la dissolution de l'oxyde de plutonium est totale et l'on constate que le rendement faradique est sensiblement égal à 1.

Exemple 3

Dissolution de bioxyde de plutonium.

On utilise un électrolyseur en verre ayant une capacité utile de 3,5 l, qui est équipé:

- d'un serpentin en verre où circule un fluide réfrigérant afin d'assurer l'évacuation des calories par l'électrolyse,
- d'une anode en platine ayant une surface de 850 $cm^2$,
- d'un agitateur en téflon entraîné par un moteur électrique assurant le brassage énergique de la solution aqueuse et de la poudre de bioxyde de plutonium,
- d'une sonde de températures permettant de commander le fonctionnement du groupe réfrigérant, et
- d'une vanne de soutirage de la solution.

On réalise la dissolution de 300 g de bioxyde de plutonium dans les conditions suivantes:

- acidité nitrique: 4 $mol.l^{-1}$,
- température: 25°C,
- concentration en argent: $5.10^{-2}$ $mol.l^{-1}$,
- densité de courant anodique: 35 $mA.cm^{-2}$,
- volume initial de solution: 3,5 l,
- volume final de solution (volume initial + volume de fuite du compartiment cathodique): 3,9 l,
- surface de l'anode: 850 $cm^2$,
- compartiment cathodique en silicate d'alumine ayant un volume de 175 ml,
- solution cathodique: $HNO_3$ à 8 $mol.l^{-1}$.

On obtient la dissolution des 300 g de bioxyde de plutonium en 165 min, ce qui correspond à un rendement faradique de 0,71, le titre final en plutonium étant de 67,9 $g.l^{-1}$.

Exemple 4

Dans cet exemple, on utilise le dispositif de dissolution conforme à l'invention représenté sur la figure 1.

On réalise la dissolution d'un kg de plutonium sous forme d'oxyde en 4 h dans les conditions suivantes:

- acidité nitrique: 4 $mol.l^{-1}$,
- intensité du courant: 60 A,
- surface de l'anode: 1000 $cm^2$,
- concentration totale en argent: $5.10^{-2}$ $mol.l^{-1}$,
- volume de l'anolyte: 20 l,
- volume de catholyte: 300 ml.

Le rendement faradique est de 0,93.

Dans cet exemple, le compartiment cathodique 12 est rempli d'une solution d'acide nitrique 8N et la cathode est constituée par une tige de tantale.

Exemple 5

Cet exemple illustre la dissolution en continu de bioxyde de plutonium dans le dispositif de la figure 2. Dans ce cas, on introduit en continu dans le second tube 3 l'oxyde de plutonium à dissoudre par la trémie 19 et l'acide nitrique et l'oxyde d'argent par les conduites 24. On fait fonctionner la turbine 15 et on applique une différence de potentiel enter l'anode 9 et la cathode 11 de façon à obtenir une intensité de courant anodique de 70 A. Le débit d'introduction en oxyde de plutonium ($PuO_2$) est de 250 g/h, le débit d'introduction de l'oxyde d'argent (AgO) est de 7,75 g/h et le débit d'acide nitrique à 4 mol.$l^{-1}$ est de 1,25 l/h. Dans ces conditions, la solution évacuée du dispositif par la conduite 31 comprend 176 g/l de plutonium.

Le rendement faradique est de 0,77.

**Revendications**

1. Procédé de dissolution d'oxyde de plutonium et/ou d'oxyde de neptunium, consistant à introduire dans une cellule d'électrolyse ayant une anode et une cathode, une solution aqueuse d'acide nitrique ayant une concentration un acide nitrique de 2 à 8 mol.$l^{-1}$, l'oxyde de plutonium et/ou l'oxyde de neptunium à dissoudre et un agent oxydant constitué par de l'oxyde d'argent pour oxyder les oxydes de plutonium et/ou de neptunium et les dissoudre dans la solution, et à appliquer une différence de potentiel entre l'anode et la cathode pour régénérer l'agent oxydant, caractérisé en ce que l'on soumet la solution à une agitation au niveau de l'anode, et en ce que la différence de potentiel appliquée entre l'anode et la cathode est telle que l'on maintient l'intensité du courant I dans la cellule à une valeur constante choisie en fonction de la surface de l'anode et de la concentration en argent de la solution pour obtenir un rendement faradique d'au moins 0,2.

2. Procédé selon la revendication 1, caractérisé en ce que la concentration en acide nitrique de la solution aqueuse est de 2 à 6 mol.$l^{-1}$.

3. Procédé selon l'une quelconque des revendications 1 à 2, caractérisé en ce que l'on opère à une température de 20 à 40°C.

4. Dispositif de dissolution des oxydes de plutonium et/ou de neptunium, à l'état solide caractérisé en ce qu'il comprend:
- un premier tube (1) et un second tube (3) d'axe vertical ayant chacun des dimensions telles qu'ils soient géométriquement sûrs, lesdits tubes étant reliés entre eux par au moins une conduite (5, 7) permettant de faire circuler un mélange solide-solution du second tube au premier tube,
- une anode (9) disposée dans le premier tube,
- une cathode (11) disposée dans le premier tube à l'intérieur d'un compartiment cathodique (12) délimité en partie par une paroi poreuse en matériau isolant électrique,
- des moyens (15) pour agiter le mélange solide-solution présent dans le premier tube,
- des moyens (17) pour refroidir le mélange solide-solution, et
- des moyens (19) pour introduire dans le second tube l'oxyde de plutonium et/ou l'oxyde de neptunium à dissoudre et la solution d'acide nitrique nécessaire pour la dissolution.

5. Dispositif selon la revendication 4, caractérisé en ce que les deux tubes sont reliés par deux conduites (5 et 7) permettant de faire circuler le mélange solide-solution du second tube au premier tube puis du premier tube au second tube, et en ce que les moyens pour agiter le mélange solide-solution présent dans le premier tube sont des moyens qui permettent également de mettre en circulation le mélange solide-solution du premier tube au second tube.

6. Dispositif selon la revendication 5, caractérisé en ce que les moyens (17) pour refroidir le mélange solide-solution sont disposés dans le second tube.

7. Dispositif selon l'une quelconque des revendications 5 et 6, caractérisé en ce qu'il comprend des moyens (21) pour détecter la fin de la dissolution.

8. Dispositif selon l'une quelconque des revendications 5 à 7, caractérisé en ce qu'il comprend une conduite de vidange (23) débochant à la partie inférieure du second tube.

9. Dispositif selon la revendication 4, caractérisé en ce que le dispositif comprend une seule conduite (7) reliant les parties inférieures du premier et du second tubes et en ce qu'il est muni d'une conduite d'évacuation en trop-plein (31) à la partie supérieure du premier tube.

10. Dispositif selon la revendication 9, caractérisé en ce que les moyens de refroidissement (17) sont disposés dans le premier tube.

11. Dispositif selon l'une quelconque des revendications 4 à 10, caractérisé en ce que le compartiment cathodique est relié à une colonne (13) de lavage des gaz.

12. Dispositif selon l'une quelconque des revendications 4 à 11, caractérisé en ce qu'il comprend des moyens (14) pour détecter le niveau d'un liquide présent dans le compartiment cathodique et des moyens (16, 18) asservis à ces moyens de détection pour introduire un liquide dans le compartiment cathodique afin de maintenir le niveau de liquide dans ce compartiment à une valeur voulue.

13. Dispositif selon l'une quelconque des revendications 4 à 14, caractérisé en ce qu'il comprend en outre un écran (25) en matériau neutrophage disposé entre les deux tubes (1 et 3).

**Patentansprüche**

1. Verfahren zur Auflösung von Plutoniumoxid und/oder Neptuniumoxid, welches darin besteht, in eine eine Anode und eine Kathode aufweisende Elektrolysezelle eine wässrige Lösung von Salpetersäure, die eine Salpetersäurekonzentration von 2 bis 8 mol.$l^{-1}$ besitzt, das aufzulösende Plutoniumoxid und/oder Neptuniumoxid und ein Oxidationsmittel einzubringen, welches zum Oxidieren der Plutonium- und/oder Neptuniumoxide aus Silberoxid besteht, und sie in dieser Lösung aufzulösen, und einen Potentialunterschied zwischen der Anode und der Kathode anzulegen, um das Oxidationsmittel zu regenerieren, dadurch gekennzeichnet, dass man die Lösung auf der Höhe der Anode bewegt und dass der zwischen der Anode und der Kathode angelegte Potentialunterschied derart ist, dass man die Stromstärke

I in der Zelle auf einem konstanten Wert hält, der als Funktion der Anodenoberfläche und der Silberkonzentration der Lösung gewählt wird, um eine Faraday-Ausbeute von wenigstens 0,2 zu erhalten.

2. Verfahren nach Anspruch 1, dadurch gekennzeichnet, dass die Salpetersäurekonzentration der wässrigen Lösung 2 bis 6 $mol.l^{-1}$ beträgt.

3. Verfahren nach irgendeinem der Ansprüche 1 bis 2, dadurch gekennzeichnet, dass man bei einer Temperatur von 20 bis 40°C arbeitet.

4. Einrichtung zur Auflösung von Plutonium- und/oder Neptuniumoxiden im festen Zustand, dadurch gekennzeichnet, dass sie umfasst:

- ein erstes Rohr (1) und ein zweites Rohr (3) mit vertikalen Achsen, von denen jedes derartige Abmessungen aufweist, dass sie geometrisch sicher sind, und wobei die genannten Rohre miteinander durch wenigstens eine Leitung (5, 7) verbunden sind, die erlaubt, dass eine Mischung aus Feststoff und Lösung von dem zweiten Rohr zu dem ersten Rohr strömen kann,
- eine in dem ersten Rohr angeordnete Anode (9),
- eine in dem ersten Rohr innerhalb eines kathodischen Abteils (12) angeordnete Kathode (11), welches teilweise durch eine poröse Wand aus einem elektrisch isolierenden Material begrenzt ist,
- Mittel (15), um die Mischung aus Feststoff und Lösung zu bewegen, die sich in dem ersten Rohr befindet,
- Mittel (17), um die Mischung aus Feststoff und Lösung zu kühlen, und
- Mittel (19), um in das zweite Rohr das aufzulösende Plutoniumoxid und/oder Neptuniumoxid und die für die Auflösung notwendige Salpetersäurelösung einzubringen.

5. Einrichtung nach Anspruch 4, dadurch gekennzeichnet, dass die Rohre durch zwei Leitungen (5) und (7) verbunden sind, die ermöglichen, dass die Mischung aus Feststoff und Lösung von dem zweiten Rohr zu dem ersten Rohr und dann von dem ersten Rohr zu dem zweiten Rohr strömt, und dass die sich in dem ersten Rohr befindenden Mittel zur Bewegung der Mischung aus Feststoff und Lösung Mittel sind, die auch erlauben, die Mischung aus Feststoff und Lösung von dem ersten Rohr zu dem zweiten Rohr in Strömung zu versetzen.

6. Einrichtung nach Anspruch 5, dadurch gekennzeichnet, dass die Mittel (17) zum Kühlen der Mischung aus Feststoff und Lösung in dem zweiten Rohr angeordnet sind.

7. Einrichtung nach irgendeinem der Ansprüche 5 oder 6, dadurch gekennzeichnet, dass sie Mittel (21) umfasst, um das Ende der Auflösung zu erfassen.

8. Einrichtung nach irgendeinem der Ansprüche 5 bis 7, dadurch gekennzeichnet, dass sie eine Entleerungsleitung (23) umfasst, die in den unteren Abschnitt des zweiten Rohrs mündet.

9. Einrichtung nach Anspruch, dadurch gekennzeichnet, dass die Einrichtung eine einzige Leitung (7) umfasst, die die unteren Abschnitte des ersten und des zweiten Rohrs verbindet, und dass sie mit einer Überlauf-Auslaufleitung (31) an dem oberen Abschnitt des ersten Rohrs ausgerüstet ist.

10. Einrichtung nach Anspruch 9, dadurch gekennzeichnet, dass die Kühlmittel (17) in dem ersten Rohr angeordnet sind.

11. Einrichtung nach irgendeinem der Ansprüche 4 bis 10, dadurch gekennzeichnet, dass das kathodische Abteil mit einer Gaswaschsäule (13) verbunden ist.

12. Einrichtung nach irgendeinem der Ansprüche 4 bis 11, dadurch gekennzeichnet, dass sie Mittel zur Erfassung der Höhe einer in dem kathodischen Abteil vorhandenen Flüssigkeit und Mittel (16, 18) umfasst, die von diesen Erfassungsmitteln geregelt sind, um eine Flüssigkeit in das kathodische Abteil einzubringen, damit die Höhe der Flüssigkeit in diesem Abteil auf einem erwünschten Wert gehalten wird.

13. Einrichtung nach irgendeinem der Ansprüche 4 bis 14, dadurch gekennzeichnet, dass sie ferner eine zwischen den zwei Rohren (1 und 3) angeordnete Abschirmung (25) aus einem Neutronen einfangenden Material umfasst.

## Claims

1. Process for dissolving plutonium oxide and/or neptunium oxide, consisting of introducing into an electrolysis cell having an anode and a cathode an aqueous nitric acid solution having a nitric acid solution of 2 to 8 $mol.l^{-1}$, the plutonium and/or neptunium oxide to be dissolved and an oxidizing agent constituted by silver oxide in order to oxidize the plutonium and/or the neptunium oxides and dissolve them in the solution and the apply a potential difference between the anode and cathode for regenerating the oxidizing agent, characterized in that the solution is stirred at the anode and in that the potential difference applied between the anode and the cathode is such that the current intensity I in the cell is maintained at a constant value chosen as a function of the surface of the anode and the silver concentration of the solution to obtain a faradic yield of at least 0.2.

2. Process according to claim 1, characterized in that the nitric acid concentration of the aqueous solutionis 2 to 6 $mol.l^{-1}$.

3. A process according to either of the claims 1 and 2, characterized in that in working takes place at a temperature of 20 to 40°C.

4. Apparatus for dissolving plutonium and/or neptunium oxides in the solid state, characterized in that it comprises:

- a first (1) and a second (2) vertically axed tubes, each having dimensions such that they are geometrically reliable, said tubes being interconnected by at least one pipe (5, 7) making it possible to circulate a solid - solution mixture from the second tube to the first tube,
- an anode (a) arranged in the first tube,
- a cathode (11) arranged in the first tube within a cathode compartment (12), partly defined by a

porous electrically insulating material wall,
- a means (15) for stirring the soilid - solution mixture in the first tube,
- means (17) for cooling the solid - solution mixture, and
- means (19) for introducing into the second tube, the plutonium and/or neptunium oxide to be dissolved and the nitric acid solution necessary for dissolving purposes.

5. Apparatus according to claim 4, characterized in that the two tubes are connected by two pipes (5, 7) making it possible to circulate the solid - solution mixture from the second tube to the first tube and then from the first tube to the second tube and the means for stirring the solid - solution mixture in the first tube also make it possible to circulate the solid - solution mixture from the first tube to the second tube.

6. Apparatus according to claim 5, characterized in that the means (17) for cooling the solid - solution mixture are arranged in the second tube.

7. Apparatus according to any one of the claims 5 and 6, characterized in that it comprises means (21) for detecting the end of dissolving.

8. Apparatus according to any one of the claims 5 to 7, characterized in that it comprises a discharge pipe (23) issuing into the lower part of the second tube.

9. Apparatus according to claim 4, characterized in that the apparatus comprises a single pipe (7) correcting the lower parts of the first and second tubes and where it is provided with an overflow discharge pipe (31) in the upper part of the first tube.

10. Apparatus according to claim 9, characterized in that the cooling means (17) are positioned in the first tube.

11. Apparatus according to any one of the claims 4 to 10, characterized in that the cathode compartment is connected to a gas washing column (13).

12. Apparatus according to any one of the claims 4 to 11, characterized in that it comprises means (14) for detecting the level of a liquid present in the cathode compartment and means (16, 18) dependent on said detection means for introducing a liquid into the cathode compartment, in order to maintain the liquid level therein at a desired value.

13. Apparatus according to any one of the claims 4 to 14, characterized in that it also comprises a neutrophage material screen (25) positioned between the two tubes (1 and 3).

FIG. 1

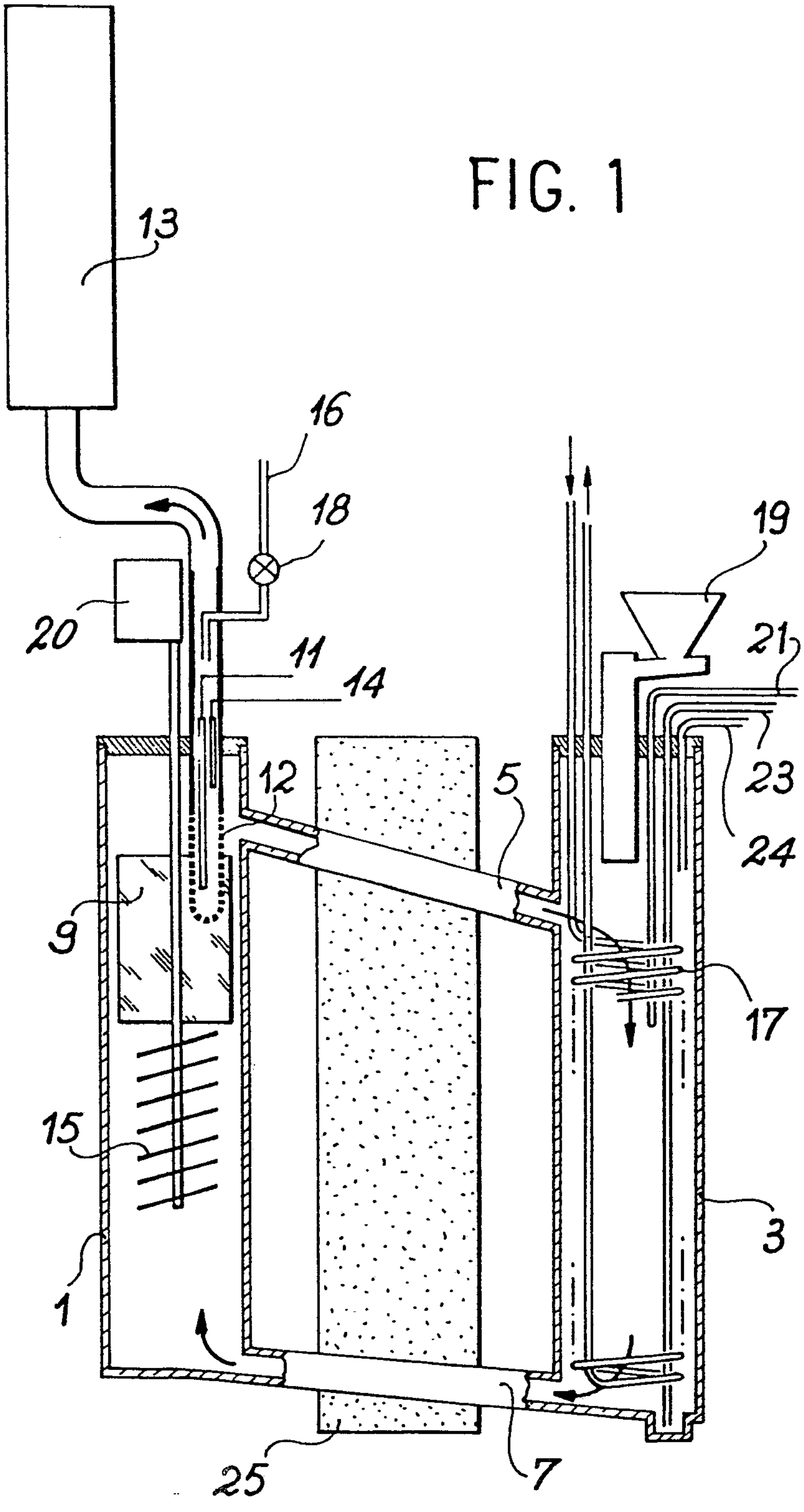

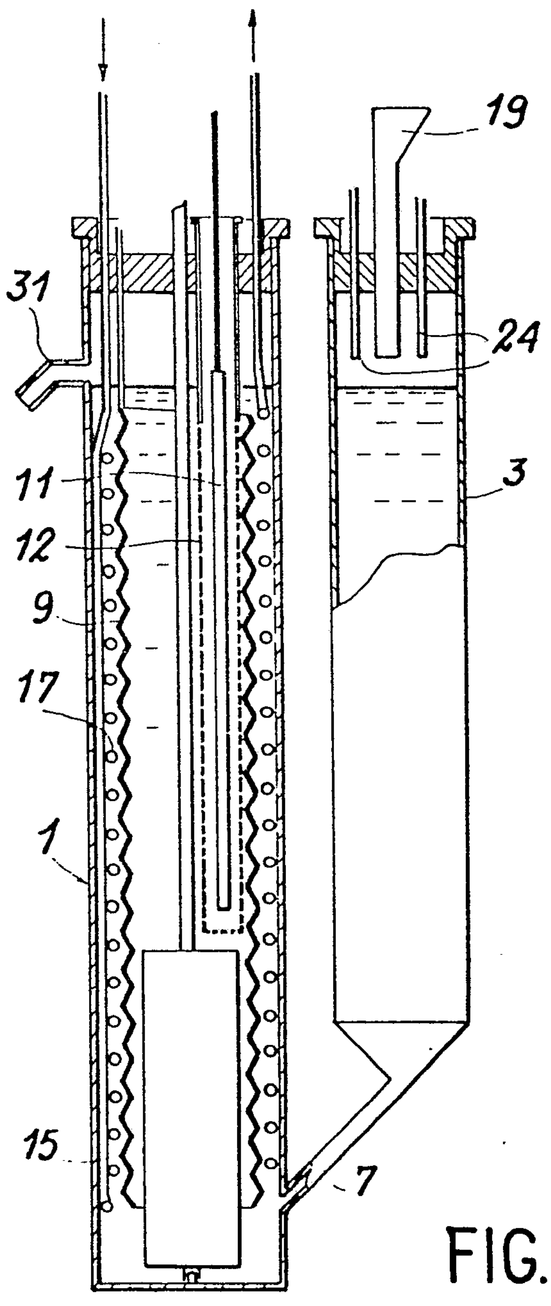


FIG. 2